Europäisches Patentamt

European Patent Office

Office européen des brevets

(19)

(11) Publication number: **0 311 577**
**A1**

# (12) EUROPEAN PATENT APPLICATION

(21) Application number: **88830406.0**

(22) Date of filing: **06.10.88**

(51) Int. Cl.⁴: **F 16 D 3/84**
**F 16 D 3/32, A 01 B 71/08**

(30) Priority: **07.10.87 IT 1176087**

(43) Date of publication of application:
**12.04.89 Bulletin 89/15**

(84) Designated Contracting States:
**AT DE ES FR GB IT**

(71) Applicant: **Bondioli, Edi**
**Via Gina Bianchi 18**
**46029 Suzzara Mantova (IT)**

(72) Inventor: **Bondioli, Edi**
**Via Gina Bianchi 18**
**46029 Suzzara Mantova (IT)**

(74) Representative: **Mannucci, Gianfranco, Dott.-Ing.**
**Ufficio Tecnico Ing. A. Mannucci Via della Scala 4**
**I-50123 Firenze (IT)**

(54) **An articulated joint for mechanical drives, in particular of the homokinetic type.**

(57) An articulated joint for mechanical drives, in particular of the homokinetic type with two universal couplings and a center piece between them, and with a protective cover for the rotating parts, supported by the latter, the said cover comprises two sliding bearing supports (22, 24) between the cover itself and the center piece (5); the cover consists of two rigid parts (16,18) joined together in the assembly on the said center piece (5) and of a flexible part (26) engaged in the assembly together with the two sliding bearings (22, 24).

## Description

### AN ARTICULATED JOINT FOR MECHANICAL DRIVES, IN PARTICULAR OF THE HOMOKINETIC TYPE

The invention relates to an articulated joint for mechanical drives, in particular of the homokinetic type, with two universal couplings and a center piece between them, and with a protective cover for the rotating parts, supported by the latter.

In accordance with the invention, the said cover comprises two sliding-bearing supports located between the cover itself and the center piece, and the said cover consists of two rigid parts joined together in the assembly on the said center piece and of a flexible part engaged in the assembly together with the two sliding bearings.

Advantageously one of the said two rigid parts has, in its own profile of revolution, an external annular groove, in the region of which the hook for a conventional retaining chain is provided, the excess length of the said retaining chain, with respect to the fixed hook, accommodating itself inside and around the said groove during rotation, thereby avoiding friction with the rotating parts.

The joint may comprise an additional cover acting as an extension - over the articulated joint - of the protective casing mounted on the shaft, in which case hooks for connecting the joint and shaft covers are provided on the said additional cover and on the cover consisting of two rigid parts.

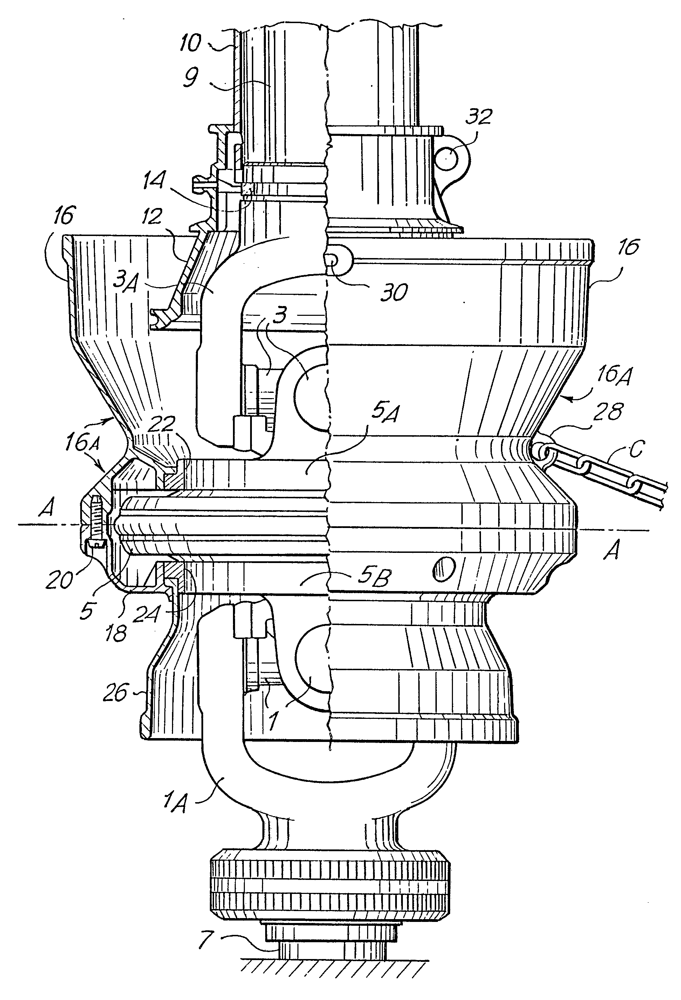

The drawing shows a possible embodiment of the invention and, in particular, the drawing shows a longitudinal half-section through the joint and its covers.

As shown in the drawing, 1 and 3 denote the two universal couplings which form the homokinetic joint and which are arranged on opposite sides of a center piece 5 located between the said two universal couplings; the forks 1A and 3A of the couplings are connected to a transmission member 7 and a drive shaft 9, respectively. The shaft 9 has its own protective casing 10 which ends in a cowling 12 for covering and partially protecting the fork 3A; the cowling 12 rests via its own bearing 14 on the rotating part consisting of the shaft 9 and the fork 3A.

The articulated joint as defined above, in addition to being given minimum protection by the cowling 12, is protected by a cover which is not able to rotate and which consists of two rigid parts 16 and 18, respectively, joined together along a transverse plane marked A-A by means of screwing means 20 located at intervals along the circumference. The two rigid parts 16 and 18 extend so as to cover in particular the center piece 5 of the articulated joint and, when joined together, they engage with two friction sliding bearings 22 and 24, respectively, which rest on sliding parts 5A and 5B, respectively, of the piece 5. Joining together the two parts 16 and 18 causes the two sliding bearings 22 and 24 to engage so that they operate on the tracks 5A and 5B and on the sides of the piece 5 adjacent thereto.

When the two rigid parts 16 and 18 are joined together, a flexible part 26 of the cover is also engaged, this part extending partially over the joint formed by the cotter pins 1 and the fork 1A; the flexibility of the part 26 allows the part of the drive leading to the fork 1A and the transmission member 7 ample angular movement. The rigid part 16 protects the articulated joint formed by the cotter pins 3 and the fork 3A, in conjunction with the cowling 12 located inside the cover 16.

Characteristically, the cover 16 has externally an annular groove 16A which extends to a depth suitable for the purposes indicated below and which has a hook 28 for a chain C typically used to anchor the cover surrounding the abovementioned drive against rotation. When the chain is linked to the fixed hook - not visible - (so as to prevent it from rotating spontaneously), the excess length of the chain itself tends to accommodate itself around and inside the annular groove 16A, preventing any danger of the chain itself resting or rubbing against rotating parts of the drive, which otherwise might come into contact with it; the presence of the groove 16A, however, prevents these excursions and hence eliminates these dangers.

Advantageously, provision is also made for anchoring the cowling 12 - forming part of the casing 10, 12 protecting the shaft 9 - and the rigid protection part 16 in a very practical and economical arrangement taking up a minimum amount of space; this is achieved by means of two hooks, 30 and 32 respectively, provided on the rigid protection part 16 and on the cowling part 12; these two hooks 30 and 32 enable mutual anchoring of the casing 10, 12 and the cover 16, 18, 26 so as to ensure proper functioning of the entire drive cover simply linked to the chain C.

The advantages of an arrangement of this kind are obvious and easily understood by a person skilled in the art.

### Claims

1. An articulated joint for mechanical drives, in particular of the homokinetic type with two universal couplings and a center piece between them, and with a protective cover for the rotating parts, supported by the latter, wherein the said cover comprises two sliding bearing supports (22, 24) between the cover itself and the center piece (5), and wherein the said cover consists of two rigid parts (16, 18) joined together in the assembly on the said center piece (5) and of a flexible part (26) engaged in the assembly together with the two sliding bearings (22, 24).

2. The articulated joint as claimed in the preceding claim, wherein one (16) of the said two rigid parts (16, 18) has, in its own profile of revolution, an external annular groove (16A), in the region of which a hook (28) for a conventional retaining chain (C) is provided, the excess length of the said retaining chain, with respect to the fixed hook, accommodating itself inside and around the said groove (16A) during rotation, thereby avoiding friction with the rotating parts.

3. The articulated joint as claimed in the preceding claims, comprising an additional cover (12) acting as an extension - over the articulated joint - of the protection casing (10) mounted on the shaft (9), wherein hooks (30 and 32, respectively) for connecting the joint and shaft covers are provided on the said additional cover (12) and on the cover consisting of two rigid parts (16, 18).

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | EP-A-0 207 900 (BONDIOLI)<br>* Whole document *<br>--- | 1-3 | F 16 D 3/84<br>F 16 D 3/32<br>A 01 B 71/08 |
| Y | FR-A-2 334 877 (WALTERSCHEID)<br>* Whole document *<br>--- | 1-3 | |
| Y | LU-A- 61 410 (ATKINSONS)<br>* Whole document *<br>----- | 2 | |

TECHNICAL FIELDS SEARCHED (Int. Cl.4)

F 16 D 3/00
F 16 P

The present search report has been drawn up for all claims

| Place of search | Date of completion of the search | Examiner |
|---|---|---|
| THE HAGUE | 13-12-1988 | BALDWIN D.R. |

EPO FORM 1503 03.82 (P0401)